(19) Europäisches Patentamt

European Patent Office

Office européen des brevets

(11) Veröffentlichungsnummer: **0 303 835**

**A1**

## (12) EUROPÄISCHE PATENTANMELDUNG

(21) Anmeldenummer: **88111590.1**

(22) Anmeldetag: **19.07.88**

(51) Int. Cl.⁴: **B01D 29/36 , B01D 29/42**

(30) Priorität: **12.08.87 DE 8710990 U**

(43) Veröffentlichungstag der Anmeldung:
**22.02.89 Patentblatt 89/08**

(84) Benannte Vertragsstaaten:
**DE NL**

(71) Anmelder: **Krupp MaK Maschinenbau GmbH**
**Falckensteiner Strasse 2-4**
**D-2300 Kiel 17(DE)**

(72) Erfinder: **Aeffner, Kurt, Dipl.-Ing.**
**Blauer Blick 13**
**D-2304 Laboe(DE)**

(74) Vertreter: **Hansmann, Dierk, Dipl.-Ing.**
**Jessenstrasse 4**
**D-2000 Hamburg 50(DE)**

(54) **Kraftstoffilter.**

(57) Bei Kraftstoffiltern (1,2) für Motoren großer Leistung mit Kraftstoffeinspritzung ist vorgesehen, daß in Fortsetzung des Filtergehäuses (4) im oberen Teil eine Haube (6) zur bildung eines Zusatzraumes (7) als Pufferraum angeordnet ist.

EP 0 303 835 A1

# Kraftstofffilter

Die Neuerung bezieht sich auf einen Kraftstoffilter für Motoren relativ großer Leistung mit Kraftstoffeinspritzung, wobei ein Filtergehäuse zur Aufnahme eines Filters mit einer Zu- und Ableitung angeordnet ist und das Filtergehäuse eine Entleerungsbohrung sowie eine Be- und Entlüftungsbohrung aufweist.

Anordnungen dieser Art sind bekannt und sind mit einem Abdeckflansch versehen, um in regelmäßigen Wartungsintervallen den aufgenommen Filter zu kontrollieren. Es hat sich aber bei Motoren mit relativ großer Leistung gezeigt, daß Rückstöße durch die Einspritzpumpe auftreten, die die einzelnen Bauelemente innerhalb des Kraftstoffsystems beeinträchtigen und einen frühzeitigen Ausfall herbeiführen können. Es muß berücksichtigt werden, daß Betriebsdrücke in Kraftstoffsystemen bis 20 bar und Einspritzdrücke bis 1000 bar betragen, wobei die überschüssige Menge während des Einspritzvorganges abgesteuert wird und Druckstöße im System bis 80 bar verursacht.

Zu diesem Zweck ist bereits vorgeschlagen worden, Dämpfer mit Membranen anzuordnen. Diese haben sich aber in der Praxis nicht bewährt, da durch die hohen Belastungen durch Temperatur, Druck und chemische Zusätze die Membranen zerstört werden.

Die Aufgabe der Neuerung ist es, eine Dämpfvorrichtung auf eine einfache mechanische Weise auszubilden, die eine Ausbreitung von Druckspitzen im System verhindert.

Die Lösung dieser Aufgabe erfolgt neuerungsgemäß dadurch, daß in Fortsetzung des Filtergehäuses im oberen Teil eine Haube zur Bildung eines Zusatzraumes als Pufferraum angeordnet ist.

Hierdurch ist es möglich, nach der Wartung bzw. bei Inbetriebnahme das bestehende Luftvolumen in den durch die Haube gebildeten Pufferraum zu leiten und dadurch ein Luftpolster aufzubauen, das den Abbau der Druckspitzen ermöglicht.

Ferner wird vorgeschlagen, daß das Volumen der Haube etwa entsprechend dem Volumen des Filtergehäuses bemessen ist. Es soll dadurch gewährleistet werden, daß selbst bei niedrigen Betriebsdrucken das Filtergehäuse und damit die Ablaufseite des Filters grundsätzlich mit Brennstoff gefüllt ist.

Zweckmäßigerweise ist vorgesehen, um einen Filterwechsel vorzunehmen, daß die Haube lösbar mit dem Filtergehäuse verbunden ist.

Um ein Aufzehren des Puffervolumens durch Verbindung mit dem Kraftstoff zu reduzieren und eine beruhigte Zone zu schaffen, wird vorgeschlagen, daß im Bereich zwischen Filtergehäuse und Haube eine Trennwand mit mindestens einer Verbindungsbohrung angeordnet ist.

Eine günstige konstruktive Ausbildung wird dadurch geschaffen, daß im Verbindungsbereich zwischen Filtergehäuse und Haube eine Be- und Entlüftungsbohrung angeordnet ist.

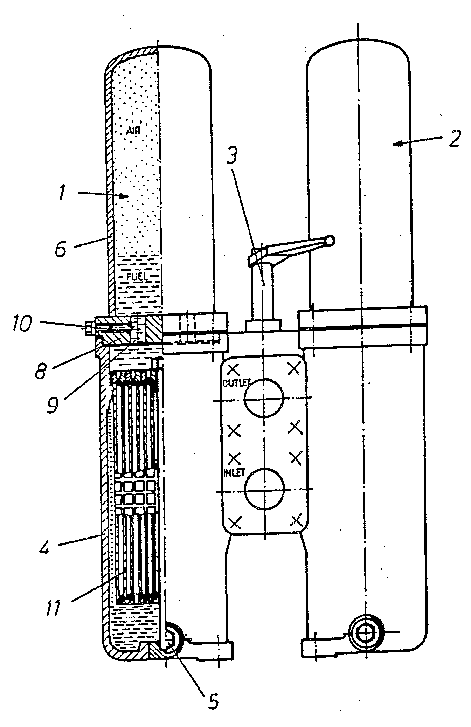

In der Zeichnung ist eine Ausbildung einer umschaltbaren Kraftstoff-Doppelfilter-Anordnung schematisch dargestellt.

Bei der dargestellten Anordnung sind zwei gleichartige Kraftstoffiltervorrichtungen 1 und 2 parallel angeordnet und wahlweise über ein Umschaltorgan 3 einsetzbar. Hierbei sind eine Zu- und Ableitung über das Umschaltorgan 3 zu einem Filtergehäuse 4 geführt. Das Filtergehäuse 4 nimmt einen Filter S auf und besitzt eine Entleerungsbohrung 5.

Im oberen Teil wird das Filtergehäuse 4 durch eine aufgesetzte Haube 6 fortgesetzt, die lösbar mit dem Filtergehäuse 4 verbunden ist. Durch die Haube 6 wird ein Zusatzraum 7 als Pufferraum gebildet. Zwischen Filtergehäuse 4 und Haube 6 ist eine Trennwand 8 mit einer Verbindungsbohrung 9 angeordnet. Die Trennwand 8 ist in diesem Fall als Verbindungsflansch ausgebildet und besitzt eine nach außen geführte Be- und Entlüftungsbohrung 10.

Bei einem Wartungsvorgang in regelmäßigen Abständen erfolgt über das Umschaltorgan 3 beispielsweise eine Einschaltung der Anordnung 2, während die Anordnung 1 abgeschaltet ist. Über die Entleerungsbohrung 5 wird der Kraftstoff abgelassen, wobei zusätzlich die Belüftungsbohrung 10 geöffnet werden muß. Durch Abnehmen der Haube 6 mit Trennwand 8 ist der Filter 5 entsprechend herausnehmbar. Nach dem erneuten Einsetzen des Filters 11, Aufsetzen der Haube 6 und Verschließen der Bohrungen 5,10 ist die Anordnung wieder betriebsbereit. Bei Inbetriebnahme wird nunmehr die eingeschlossene Luft im Zusatzraum 7 komprimiert und bildet ein Druckpolster, das die auftretenden Rückstöße im Einspritzsystem auffängt. Durch die Trennwand 8 mit der Verbindungsbohrung 9 wird zusätzlich eine beruhigte Kraftstoffzone geschaffen.

Gegebenenfalls ist es auch möglich, den Kraftstoff aufzufüllen und die Be- und Entlüftungsbohrung 10 solange geöffnet zu lassen, bis Kraftstoff austritt.

Das nunmehr verkleinerte Luftpolster kann sich dann bei eventuellem Druckabfall nicht in das System hinein ausdehnen.

**Ansprüche**

1. Kraftstoffilter für Motoren relativ großer Leistung mit Kraftstoffeinspritzung, wobei ein Filtergehäuse zur Aufnahme eines Filters mit einer Zu- und Ableitung angeordnet ist und das Filtergehäuse eine Entleerungsbohrung sowie eine Be- und Entlüftungsbohrung aufweist, dadurch gekennzeichnet, daß in Fortsetzung des Filtergehäuses (4) im oberen Teil eine Haube (6) zur Bildung eines Zusatzraumes (7) als Pufferraum angeordnet ist.

2. Kraftstoffilter nach Anspruch 1, dadurch gekennzeichnet, daß das Volumen der Haube (6) etwa entsprechend dem Volumen des Filtergehäuses (4) bemessen ist.

3. Kraftstoffilter nach Anspruch 1 oder 2, dadurch gekennzeichnet, daß die Haube (6) lösbar mit dem Filtergehäuse (4) verbunden ist.

4. Kraftstoffilter nach einem der Ansprüche 1 bis 3, dadurch gekennzeichnet, daß im Bereich zwischen Filtergehäuse (4) und Haube (6) eine Trennwand (8) mit mindestens einer Verbindungsbohrung (9) angeordnet ist.

5. Kraftstoffilter nach einem der Ansprüche 1 bis 4, dadurch gekennzeichnet, daß im Verbindungsbereich zwischen Filtergehäuse (4) und Haube (6) eine Be- und Entlüftungsbohrung (10) angeordnet ist.

AIR

1

6

FUEL

10

8

9

3

2

OUTLET

INLET

4

11

5

| | Europäisches Patentamt | EUROPÄISCHER RECHERCHENBERICHT | Nummer der Anmeldung |
|---|---|---|---|
| | | | EP 88 11 1590 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-2 862 622  (CH.E. KIRCHER)<br>* Spalten 1-4 *<br>--- | 1-3 | B 01 D  29/36<br>B 01 D  29/42 |
| X | US-A-2 710 099  (A.A. KALINSKE)<br>* Spalten 1-6 *<br>--- | 1-3,5 | |
| A | DE-B-1 013 624  (J. MULLER)<br>* Spalte 2, Zeilen 47-50 *<br>--- | 4 | |
| A | DE-A-2 459 587  (ESCHER WYSS)<br>--- | | |
| A | DE-A-1 005 493  (PATERSON ENGINEERING CO.)<br>----- | | |
| | | | **RECHERCHIERTE SACHGEBIETE (Int. Cl.4)**<br><br>B 01 D |

Der vorliegende Recherchenbericht wurde für alle Patentansprüche erstellt

| Recherchenort | Abschlußdatum der Recherche | Prüfer |
|---|---|---|
| DEN HAAG | 18-11-1988 | DE PAEPE P.F.J. |